# EUROPÄISCHE PATENTSCHRIFT

(11) **EP 2 137 397 B1**
(45) Veröffentlichungstag und Bekanntmachung des Hinweises auf die Patenterteilung: **05.10.2011**
(21) Anmeldenummer: 08736536.7
(22) Anmeldetag: 24.04.2008
(51) Int. Cl.: F02M 25/07, B01D 45/16

(54) **VERBRENNUNGSLUFT- UND ABGASANORDNUNG EINES VERBRENNUNGSMOTORS**
COMBUSTION AIR AND EXHAUST GAS ARRANGEMENT OF AN INTERNAL COMBUSTION ENGINE
AGENCEMENT D'AIR COMBURANT ET DE GAZ D'ÉCHAPPEMENT POUR UN MOTEUR À COMBUSTION INTERNE

(30) Priorität: 24.04.2007 DE 202007005986 U
(43) Veröffentlichungstag der Anmeldung: 30.12.2009
(73) Patentinhaber: Mann + Hummel GmbH, 71638 Ludwigsburg (DE)
(72) Erfinder: BOLDA, Jan, 70806 Kornwestheim (DE); TALMON-GROS, Dietmar, 71720 Oberstenfeld (DE)
(86) Internationale Anmeldenummer: PCT/EP2008/054996
(87) Internationale Veröffentlichungsnummer: WO 2008/129076

(56) Entgegenhaltungen:
- WO-A-2006/045488
- WO-A-2008/009789
- AT-U1- 4 789
- DE-A1-102006 023 589
- DE-C- 854 286
- DE-C- 931 552

## Beschreibung

### Technisches Gebiet

Die Erfindung betrifft eine Anordnung zur Versorgung eines Verbrennungsmotors insbesondere eines Kraftfahrzeuges mit einem Verbrennungsluftstrom und zur Ableitung eines Abgasstromes von dem Verbrennungsmotor mit den Merkmalen nach dem Oberbegriff des Anspruchs 1.

### Stand der Technik

Leistung, Laufverhalten und Abgasemission von Verbrennungsmotoren, insbesondere von Kraftfahrzeugen, werden in weiten Teilen nicht nur vom Motor selbst, sondern auch von dessen Anordnung zur Versorgung mit Verbrennungsluft sowie zur Ableitung des Abgasstromes beeinflusst. Zur Leistungssteigerung werden verbreitet Abgasturbolader eingesetzt, die einen im Frischluftkanal angeordneten Verdichter und eine im Abgaskanal angeordnete Turbine aufweisen. Bei mittleren und hohen Leistungen des Verbrennungsmotors erzeugt ein derartiger Abgasturbolader in gewünschter Weise eine Ladedruckerhöhung des Verbrennungsluftstromes und eine damit einhergehende erhöhte Leistungsausbeute.

Unter Teillast kann es vorteilhaft sein den Verdichter des Abgasturboladers mit einem definierten Vordrall anzuströmen. Dazu wird dem Verdichter des Abgasturboladers ein Drallerzeuger vorgeschaltet, der den eintretenden Verbrennungsluftstrom mit einem Drall versieht. Hierdurch werden die Betriebseigenschaften des Abgasturboladers unter Teillast verbessert.

Unabhängig von der vorgenannten Problemstellung sind nach dem Stand der Technik verschiedene Maßnahmen vorgesehen, um die Abgasemission zu verbessern. Eine bekannte Maßnahme besteht darin, eine Niederdruckabgasrückführung vorzusehen, mit der im Teillastbereich ein Abgasrückführungsstrom in den Verbrennungsluftstrom eingeleitet wird. Dies dient in erster Linie der Schadstoffreduzierung, insbesondere der Reduzierung von NOX-Ausstoß.

Über die Länge der Abgasrückführung kühlt sich der Abgasrückführungsstrom ab. Dies kann zur Kondensatbildung, insbesondere zur Bildung von Wassertröpfchen führen, die beim Auftreffen auf die hoch drehenden Verdichterschaufeln des Abgasturboladers den Verdichter beschädigen können. Zur Vermeidung dieses unerwünschten Effektes werden Kondensatabscheider eingesetzt, die im Abgasstrom gebildetes Kondensat zumindest teilweise abscheiden. Bau- und Kostenaufwand sind hoch. Dieser Abscheider befindet sich in vorbekannter Bauform in einem gewissen Abstand zum Verdichtereintritt, so dass bei Mischung des Abgasrückführungsstromes mit dem Verbrennungsluftstrom eine Nachkondensation mit wiederholter Tröpfchenbildung einsetzen kann. Aus der WO 2006/045488 A1 ist die Anordnung eines Flichkraftabscheiders direkt vor dem Verdichter bekannt geworden.

Der Erfindung liegt die Aufgabe zugrunde, eine gattungsgemäße Verbrennungsluft- und Abgasanordnung eines Verbrennungsmotors derart weiterzubilden, dass die Betriebssicherheit des Abgasturboladers verbessert ist.

Diese Aufgabe wird durch eine Anordnung mit den Merkmalen des Anspruchs 1 gelöst.

### Offenbarung der Erfindung

Es wird eine Anordnung zur Versorgung eines Verbrennungsmotors mit einem Verbrennungsluftstrom und zur Ableitung eines Abgasstromes vorgeschlagen, bei welcher der für den verbesserten Teillastbetrieb vorgesehene Drallerzeuger als Zentrifugalabscheider für im Abgasrückführungsstrom gebildetes Kondensat ausgebildet ist.

Durch Nutzung der im Drallerzeuger ohnehin auftretenden, auf gebildetes Kondensat wirkende Fliehkraft- bzw. Massenträgheitskräfte kann ohne Zusatzmaßnahmen eine wirkungsvolle Abscheidung herbeigeführt werden. Auf den Aufwand eines zusätzlichen Zentrifugalabscheiders kann verzichtet werden. Systembedingt ist der Drallerzeuger für den für seine Funktion unter Teillast unmittelbar am Verdichtereintritt angeordnet, so dass ein langer Mischweg und damit die Gefahr der wiederholten Tröpfchenbildung entfällt. Da der zusätzliche Abscheider entfällt, ist nur ein verringerter Bauraum erforderlich. Der Verbrennungsmotor kann samt seiner Anbauteile kompakter aufgebaut werden.

Es kann zweckmäßig sein, den Abgasrückführungsstrom stromauf des Drallerzeugers mit dem Verbrennungsluftstrom zu mischen, wobei die Drallerzeugung bei gleichzeitiger Kondensatabscheidung erst im nachgeschalteten Drallerzeuger erfolgt.
Die Einleitung des Abgasrückführungsstromes ist im Wesentlichen tangential mit dem Drehsinn der Luftströmung im Drallerzeuger vorgesehen. Hierdurch wird die Strömungsgeschwindigkeit des Abgasrückführungsstromes im gemischten oder ungemischten Zustand direkt in einen Drall bei gleichzeitig sich einstellender Abscheidewirkung umgesetzt. Auf einen zusätzlichen Energieeintrag zur Drallerzeugung kann verzichtet werden. Zweckmäßig ist zusätzlich dazu eine Einleitung des Abgasrückführungsstromes mit einer axialen Richtungskomponente, d. h. in einem spitzen Winkel zur Hauptströmungsrichtung des Drallerzeugers in den Drallerzeuger vorgesehen. Die axiale Anströmgeschwindigkeit des Verdichters ist dadurch verbessert.

In einer zweckmäßigen Ausführung ist ein Umfangsabschnitt des Drallerzeugers mit einer radial außen liegenden Abscheiderinne für abgeschiedenes Kondensat versehen. Die durch den Drall radial nach außen gedrängten Kondensattröpfchen sammeln sich innenseitig des Umfangsabschnittes und treten dort unter Einwirkung der drallbedingten Fliehkraft, unterstützt durch die Tragwirkung des Gasstromes, in die Abscheiderinne. Die Sammlung in der Abscheiderinne vermeidet einen Wiedereintrag des abgeschiedenen Kondensats in den Gasstrom und lässt außerdem eine gesteuerte Ableitung aus dem Zentrifugalabscheider zu.

Die Abscheiderinne erstreckt sich vorteilhaft in Umfangsrichtung des Drallerzeugers um mindestens 180° und insbesondere über etwa 270°. Hierdurch ist sichergestellt, dass das abgeschiedene Kondensat im Wesentlichen vollständig gesammelt und abgeleitet werden kann.

Der Querschnitt der Abscheiderinne vergrößert sich vorteilhaft mit dem Drehsinn des Drallerzeugers. Insbesondere ist ein Kondensatableitungskanal bezogen auf den Drehsinn des Drallerzeugers in einem Endbereich der Abscheiderinne aus dieser herausgeführt. Das im Drehsinn zunehmende Kondensataufkommen kann zuverlässig vollständig von der Abscheiderinne aufgenommen und unter Nutzung seiner im Drehsinn des Drallerzeugers auftretenden Bewegungsenergie über den Kondensatableitungskanal abgeleitet werden.

In zweckmäßiger Weiterbildung ist an mindestens einer Längskante der Abscheiderinne eine insbesondere radial nach außen geneigte Dichtlippe angeordnet. Die Anordnung aus Abscheiderinne und Dichtlippe wirkt als Falle für das abgeschiedene Kondensat, welches zwar ohne weiteres in die Abscheiderinne eindringen, nicht jedoch wieder zurück in den Gasstrom aus ihr heraus gelangen kann.

In vorteilhafter Weiterbildung weist der Drallerzeuger einen zentralen, im Wesentlichen geradlinig verlaufenden Hauptluftkanal und einen mit einer tangentialen Richtungskomponente in den Hauptluftkanal mündenden Drallluftkanal auf, wobei der Rückführungskanal in den Drallluftkanal geführt ist. Über geeignete Steuereinrichtungen kann ein durch den Drallluftkanal eingeführter Nebenluftstrom und auch der Abgasrückführungsstrom an die jeweiligen Betriebszustände des Verbrennungsmotors angepasst werden. Beispielsweise wird im Volllastbetrieb auf eine Abgasrückführung verzichtet, wobei die Einleitung des Nebenluftstromes zur Drallerzeugung reduziert oder sogar abgeschaltet werden kann. Über den für den Teillastbetrieb vorgesehenen Nebenluftstrom wird der Abgasrückführungsstrom mit hoher Bewegungsenergie eingeleitet und mit Drall versehen, wodurch ohne zusätzliche Maßnahmen erhebliche Massenkräfte und damit eine gute Abscheidewirkung auftreten.

Stromauf des Drallerzeugers ist zweckmäßig ein den Abgasrückführungsstrom kühlender Wärmetauscher im Rückführungskanal angeordnet. Der Abgasturbolader und der Verbrennungsmotor werden mit kühler, durch rückgeführtes Abgas angereicherter Verbrennungsluft versorgt, wodurch der Verbrennungsmotor mit hoher Leistungsausbeute bei verringertem Schadstoffausstoß betrieben werden kann. Bei der in Folge der kühlenden Wirkung des Wärmetauschers auftretenden erhöhten Neigung zur Kondensatbildung werden die Vorteile der erfindungsgemäßen Anordnung besonders deutlich: Die wirkungsvolle Abscheidung unmittelbar eingangsseitig des Verdichters stellt sicher, dass ein im Wesentlichen kondensatfreier Gasstrom in den Verdichter eintritt, wodurch dieser eine erhöhte Betriebssicherheit aufweist.

### Kurze Beschreibung der Zeichnungen

Ein Ausführungsbeispiel der Erfindung ist nachfolgend anhand der Zeichnung näher beschrieben. Es zeigen:

Figur 1 als schematisches Blockschaltbild einen Verbrennungsmotor mit einem Abgasturbolader, mit einer Niederdruckabgasrückführung und mit einem als Zentrifugalabscheider ausgebildeten Drallerzeuger für einen verbesserten Motorteillastbetrieb,

Figur 2 eine Seitenansicht eines Abschnittes des Frischluftkanals mit dem Drallerzeuger nach Figur 1,

Figur 3 eine vergrößerte Perspektivdarstellung des Drallerzeugers mit integriertem Zentrifugalabscheider nach Figur 2,

Figur 4 eine perspektivische Längsschnittdarstellung des Drallerzeugers nach Figur 3 mit Einzelheiten der Strömungsführung und deren Auswirkung auf die Abscheidung und Kondensatableitung in einer Abscheiderinne,

Figur 5 eine schematische, vergrößerte Querschnittsdarstellung der Abscheiderinne nach Figur 4 mit an Längskanten angeordneten Dichtlippen.

### Ausführungsform(en) der Erfindung

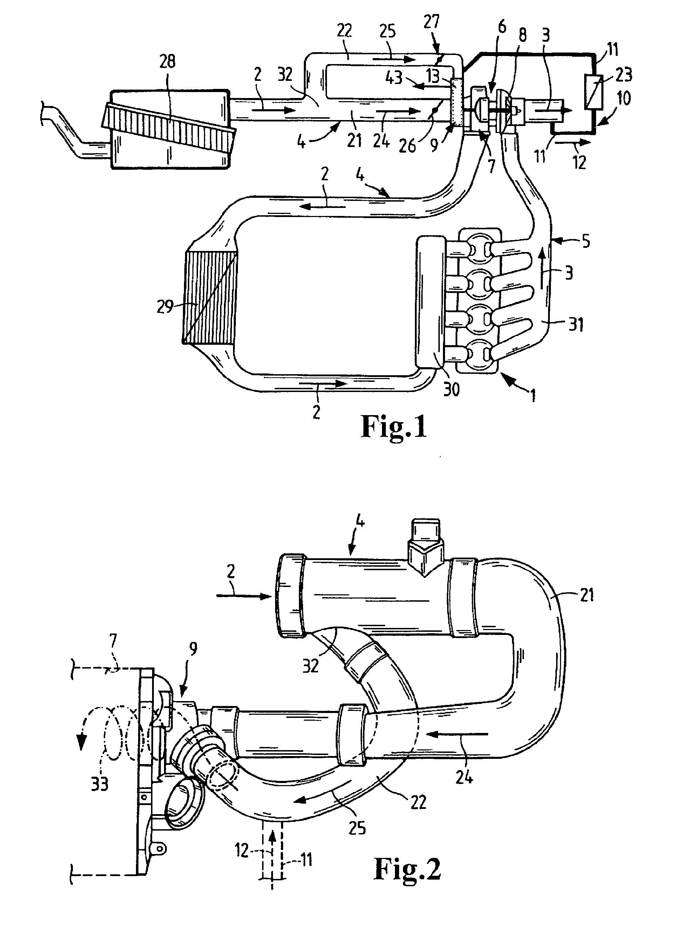

Fig. 1 zeigt als schematisches Blockschaltbild einen Verbrennungsmotor 1, der ein Dieselmotor, ein Ottomotor oder dergleichen sein kann. Im gezeigten Ausführungsbeispiel ist der Verbrennungsmotor 1 zum Antrieb eines Kraftfahrzeuges vorgesehen. Es kann auch ein Stationärmotor oder dergleichen zweckmäßig sein. Der Verbrennungsmotor 1 ist mit einer erfindungsgemäßen Anordnung zur Versorgung mit einem Verbrennungsluftstrom 2 und zur Ableitung eines Abgasstromes 3 versehen. Die Anordnung umfasst einen Frischluftkanal 4, einen Abgaskanal 5, einen Abgasturbolader 6 sowie eine Niederdruckabgasrückführung 10 mit einem Rückführungskanal 11.

Der Abgasstrom 3 wird aus dem Verbrennungsmotor 1 mittels eines Abgaskrümmers 31 gesammelt und über den Abgaskanal 5 abgeleitet. Der Verbrennungsluftstrom 2 für die Verbrennung vom Kraftstoff im Verbrennungsmotor 1 wird durch einen Frischluftkanal 4 dem Verbrennungsmotor 1 zugeführt. Hierbei tritt er eingangsseitig durch einen im Frischluftkanal 4 angeordneten Luftfilter 28 hindurch und wird mittels eines Ansaugkrümmers 30 den einzelnen Zylindern des Verbrennungsmotors 1 zugeführt.

Der Abgasturbolader 6 weist einen im Frischluftkanal 4 angeordneten Verdichter 7 sowie eine im Abgaskanal 5 angeordnete Turbine 8 auf, wobei die vom im Abgaskanal 5 geführten Verbrennungsluftstrom 2 angetriebene Turbine 8 ihrerseits den Verdichter 7 antreibt. Der Verdichter 7 erhöht den Ladedruck des durch den Luftfilter 28 hindurchgetretenen Verbrennungsluftstrom 2. Zur Verringerung der damit einhergehenden Temperaturerhöhung des Verbrennungsluftstromes 2 ist zwischen dem Verdichter 7 und dem Ansaugkrümmer 30 ein Ladeluftkühler 29 angeordnet.

Über den Rückführungskanal 11 der Niederdruckabgasrückführung 10 wird bei bestimmten Betriebszuständen des Verbrennungsmotors 1, insbesondere bei Teillast, ein Abgasrückführungsstrom 12 vom Abgasstrom 3 abgezweigt und stromauf des Abgasturboladers 6 dem Verbrennungsluftstrom 2 beigemischt.

Unter vergleichbaren Betriebsbedingungen, und insbesondere zur Verbesserung des Betriebsverhalten vom Abgasturbolader bei geringer Motorlast und niedriger Motordrehzahl, wird der Verbrennungsmotor 1 mit drallbehafteter Verdichteranströmung betrieben.Hierzu ist im Frischluftkanal 4 ein Drallerzeuger 9 angeordnet, der dem Verdichter 7 unmittelbar eingangsseitig vorgeschaltet ist. Der Drallerzeuger 9 versieht in weiter unten näher beschriebener Weise den in den Verdichter 7 eintretenden Verrennungsluftstrom 2 mit einem Drall. Der Drallerzeuger 9 ist darüber hinaus in ebenfalls weiter unten näher beschriebener Weise als Zentrifugalabscheider 13 für im Abgasrückführungsstrom 12 sich bildendes Kondensat ausgebildet. Das Kondensat wird im Zentrifugalabscheider 13 abgeschieden und entsprechend einem Pfeil 43 aus dem Drallerzeuger 9 abgeleitet und kann gesammelt, weiterbehandelt oder dem Motor rückgeführt werden.

Es kann zweckmäßig sein, einen einfachen Frischluftkanal 4 ohne weitere Abzweigungen koaxial und zentrisch in den Verdichter 7 eintreten zu lassen. Hierbei wird der eintretende Verbrennungsluftstrom 2 beispielsweise über aerodynamische Leitschaufeln oder dergleichen mit einem Drall versehen, wodurch das Ansprechverhalten des Abgasturboladers 6 verbessert wird. Dieser Drall wirkt auch auf den stromauf beigemischten Abgasrückführungsstrom 12, wodurch die weiter unten beschriebene Abscheidewirkung erzeugt wird. Im gezeigten Ausführungsbeispiel weist der Frischluftkanal 4 zwischen dem Luftfilter 28 und dem Verdichter 7 einen Abzweig 32 auf, in dessen Folge stromab des Abzweiges 32 ein Hauptluftkanal 21 und ein Drallluftkanal 22 strömungsleitend parallel geschaltet sind. Im Hauptluftkanal 21 und im Drallluftkanal 22 ist optional je eine Steuereinrichtung 26, 27 angeordnet, mittels derer ein Hauptluftstrom 24 im Hauptluftkanal 21 sowie ein Nebenluftstrom 25 im Drallluftkanal 22 betragsmäßig gesteuert bzw. geregelt werden können. Der Drallluftkanal 22 mündet in den Drallerzeuger 9, worin der Nebenluftstrom 25 mit dem Hauptluftstrom 24 unmittelbar stromauf des Verdichters 7 miteinander vereint werden. Über den Nebenluftstrom 25 wird in weiter unten näher beschriebener Weise ein Drall erzeugt, der nicht nur anteilig auf den Nebenluftstrom 25, sondern auch auf den Hauptluftstrom 24 wirkt, wodurch der Abgasturbolader 6 mit Drallunterstützung arbeitet. Hierdurch werden die Betriebseigenschaften des Abgastuboladers unter Teillast und niedriger Motordrehzahl verbessert. Für bestimmte Betriebszustände kann es zweckmäßig sein, den drallerzeugenden Nebenluftstrom 25 mittels der Steuereinrichtung 27 zu vermindern oder gar abzustellen. In diesem Zustand wird der Abgasturbolader 6 zumindest vorrangig mit im Wesentlichen drallfreier Verbrennungsluft aus dem Hauptluftstrom 24 gespeist, der seinerseits mittels der Steuereinrichtung 26 steuerbar bzw. regelbar ist.

Der Rückführungskanal 11 mündet in den Drallluftkanal 22 stromab der zugeordneten Steuereinrichtung 27 und stromauf des Drallerzeugers 9. Stromauf des Drallerzeugers 9 ist ein den Abgasrückführungsstrom 12 kühlender Wärmetauscher 23 im Rückführungskanal 11 angeordnet. Abhängig von der Stellung der Steuereinrichtung 27 wird dem Abgasrückführungsstrom 12 mehr oder weniger Verbrennungsluft in Form des Nebenluftstromes 25 beigemischt. Das Gemisch aus dem Nebenluftstrom 25 und dem Abgasrückführungsstrom 12, ggf. auch der Abgasrückführungsstrom 12 für sich alleine, erhält in dem Drallerzeuger 9 einen Drall. Kondensat im Abgasrückführungsstrom 12, welches sich insbesondere stromab des Wärmetauschers 23 infolge dessen Kühlwirkung bildet, wird mittels des im Drallerzeuger 9 integrierten Zentrifugalabscheiders 13 unmittelbar stromauf des Verdichters 7 abgeschieden und entsprechend dem Pfeil 43 abgeleitet. In dessen Folge wird im Wesentlichen kondensatfreies Gemisch aus Verbrennungsluft und rückgeführtem Abgas dem Verdichter 7 zugeführt.

Fig. 2 zeigt in einer Seitenansicht einen Abschnitt des Frischluftkanals 4 nach Fig. 1 im Bereich des Hauptluftkanals 21, des Drallluftkanals 22 und des Drallerzeugers 9. Der Drallerzeuger 9 ist unmittelbar eingangsseitig des angedeuteten Verdichters 7 auf dessen Stirnseite aufgeflanscht. Der Hauptluftkanal 21 mit dem Hauptluftstrom 24 mündet im Wesentlichen geradlinig in den Verdichter 7. Zusätzlich zum Hauptluftkanal 21 ist der Drallluftkanal 22 Teil des Frischluftkanals 4 und zweigt den Nebenluftstrom 25 am Abzweig 32 aus dem Verbrennungsluftstrom 2 ab. Der angedeutete Rückführungskanal 11 mündet stromauf des Drallerzeugers 9 in den Drallluftkanal 22, wo der Abgasrückführungsstrom 12 mit dem Nebenluftstrom 25 gemischt wird. Dieses Gemisch wird im Wesentlichen tangential mit einer axialen Richtungskomponente in den Drallerzeuger 9 eingeleitet und erfährt dadurch einen Drall mit einem Drehsinn, die hier durch einen Pfeil 33 angegeben ist. Dieser Drall überträgt sich auch auf den mittigen Hauptluftstrom 24. Durch die Mitführung des Abgasrückführungsstromes 12 mit dem Nebenluftstrom 25 erfolgt die Einleitung des Abgasrückführungsstromes 12 im gleichen Drehsinn wie die Luftströmung im Drallerzeuger.

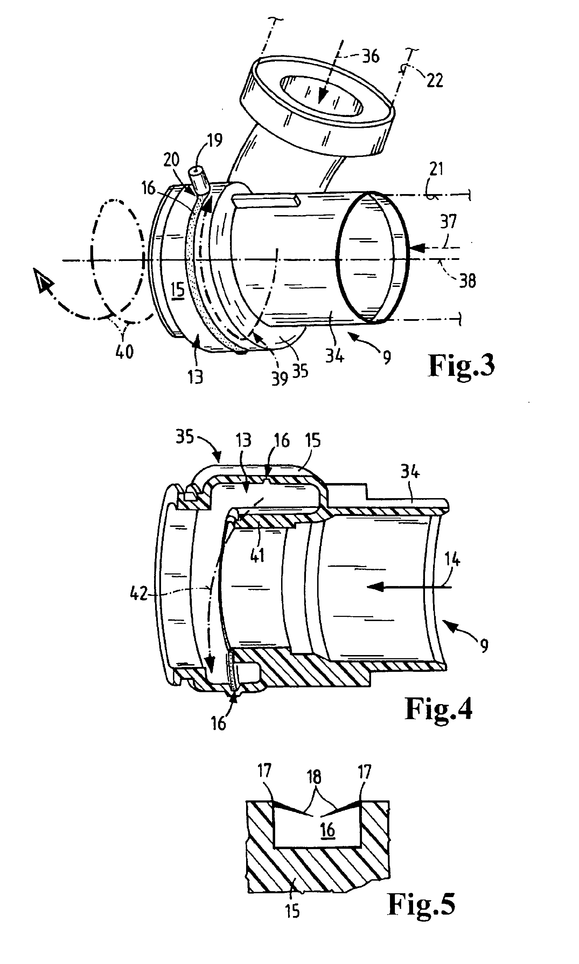

Weitere Einzelheiten der Drallerzeugung mit integrierter Kondensatabscheidung ergeben sich aus der Perspektivdarstellung nach Fig. 3, in der der Drallerzeuger 9 nach Fig. 2 als Einzelteil dargestellt ist. Gleiche Merkmale sind mit gleichen Bezugszeichen versehen. Der Drallerzeuger 9 umfasst einen mittigen, etwa zylindrischen Rohrstutzen 34 mit einer Längsachse 38. Aus der Zusammenschau mit Fig. 2 ergibt sich, dass der im Wesentlichen geradlinig verlaufende Rohrstutzen 34 Teil des zentralen Hauptluftkanals 21 ist, durch den der Hauptluftstrom 24 geradlinig und achsparallel zur Längsachse 38 entsprechend einem Pfeil 37 hindurchgeleitet wird. Der Drallluftkanal 22 mündet tangential sowie zur Längsachse 38 hin geneigt in den Drallerzeuger 9, wobei der Drallluftkanal 22 mit einer tangentialen und mit einer axialen Richtungskomponente in den Hauptluftkanal 21 geführt ist. Diese Einführung erfolgt über einen außenseitig um den Rohrstutzen 34 herumgeführten Spiralabschnitt 35, in dem der entsprechend einem Pfeil 36 mit tangentialer und axialer Richtungskomponente eintretende Gasstrom des Drallluftkanals 22 einen Drall erfährt. Innerhalb des Drallerzeugers 9 mischen sich die verschiedenen Gasströme entsprechend der Pfeile 36, 37, 39 zu einem Gesamtgasstrom mit Drall und axialer Richtungskomponente entsprechend einem Pfeil 40.

Zur Bildung des Zentrifugalabscheiders 13 weist der Drallerzeuger 9 im Bereich seines Spiralabschnittes 35 einen Umfangsabschnitt 15 in Form einer Umfangswand auf, in den am radial äußersten Umfang eine nach innen offene Abscheiderinne 16 für abgeschiedenes Kondensat eingeformt ist. Bezogen auf die Einströmung des Gases entsprechend dem Pfeil 36 erstreckt sich die Abscheiderinne 16 in Umfangsrichtung des Drallerzeugers 9 über mindestens 180°. Im gezeigten Ausführungsbeispiel erstreckt sie sich entsprechend dem Pfeil 39 über etwa 270° um die Längsachse 38 herum. Bezogen auf den durch den Pfeil 40 angegebenen Drehsinn der Luftströmung im Drallerzeuger 9 weist die Abscheiderinne 16 einen in Richtung des Drehsinnes 40 liegenden Endbereich 20 auf. Es ist ein Kondensatableitungskanal 19 vorgesehen, der in diesem Endbereich 20 aus der Abscheiderinne 16 herausgeführt ist und der entsprechend der Darstellung nach Fig. 1 abgeschiedenes Kondensat entsprechend dem dort gezeigten Pfeil 43 ableitet.

Fig. 4 zeigt eine Längsschnittdarstellung des Drallerzeugers 9 nach Fig. 3. Der zur Bildung des Zentrifugalabscheiders 13 vorgesehene Umfangsabschnitt 15 des Spiralabschnittes 35 umschließt eine in der Längsrichtung teilweise hineinragende zylindrische Innenwand 41 des Rohrstutzens 34, wobei jedoch entsprechend einem Pfeil 42 eine strömungsleitende Verbindung zwischen dem Spiralabschnitt 35 und dem Rohrstutzen 34 besteht. Bezogen auf die durch den Pfeil 42 angegebene Strömungsrichtung im Spiralabschnitt 35 wird dessen Querschnitt in Axialrichtung des Drallerzeugers 9 schmaler, wodurch entlang des Umflaufweges ein zunehmender Anteil der nach dem Pfeil 42 eingeleiteten Gasströmung dem Hauptluftstrom 24 (Fig. 2) im Rohrstutzen 34 beigemischt wird. Der Hauptluftstrom 24 (Fig. 2) weist entsprechend der Darstellung nach Fig. 4 eine Hauptströmungsrichtung 14 auf. Die in einer von 90 Grad abweichende, in Fig. 3 dargestellte Neigung des Drallluftkanals 22 zur Längsachse 38 des Hauptluftkanals 21 und die sich verengende Querschnittsform des Spiralabschnittes 35 führen dazu, dass eine Einleitung des Abgasrückführungsstromes 12 zusammen mit dem Nebenluftstrom 25 (Fig. 2) nicht nur im Wesentlichen tangential, sondern auch mit einer axialen Richtungskomponente parallel zur Hauptströmungsrichtung 14 des Drallerzeugers 9 in den Drallerzeuger 9 hinein entsprechend dem Pfeil 42 (Fig. 4) erfolgt.

Der Darstellung nach Fig. 4 ist zu entnehmen, dass sich der Querschnitt der Abscheiderinne 16 mit dem Drehsinn des Drallerzeugers 9 entsprechend dem Pfeil 42 vergrößert. Im nach Fig. 4 gezeigten Ausführungsbeispiel vergrößert sich der Querschnitt der Abscheiderinne 16 sowohl in Breitenrichtung als auch in Tiefenrichtung.

Weitere Einzelheiten zur Ausgestaltung der Abscheiderinne 16 sind der schematischen Querschnittsdarstellung nach Fig. 5 zu entnehmen. Die in den Umfangsabschnitt 15 eingeformte Abscheiderinne 16 ist zu ihrer offenen Seite hin durch Längskanten 17 begrenzt. An beiden Längskanten 17 sind schematisch angedeutete Dichtlippen 18 angeordnet, die in der gezeigten Querschnittsdarstellung ausgehend von den Längskanten 17 aufeinander zulaufen und dabei leicht radial nach außen, also in Richtung des Bodens der Abscheiderinne 16 geneigt sind. Hierdurch kann abgeschiedenes Kondensat zwar in die Abscheiderinne 16 eintreten, jedoch nicht oder nur erschwert wieder zurück in den Spiralabschnitt 35 (Fig. 4) gelangen.

## Patentansprüche

1. Anordnung zur Versorgung eines Verbrennungsmotors (1) insbesondere eines Kraftfahrzeuges mit einem Verbrennungsluftstrom (2) und zur Ableitung eines Abgasstromes (3) von dem Verbrennungsmotor (1), umfassend einen Frischluftkanal (4) zur Führung des Verbrennungsluftstromes (2), einen Abgaskanal (5) zur Führung des Abgasstromes (3), einen Abgasturbolader (6) mit einem im Frischluftkanal (4) angeordneten Verdichter (7) und mit einer im Abgaskanal (5) angeordneten Turbine (8), einen dem Verdichter (7) unmittelbar vorgeschalteten Drallerzeuger (9) für den in den Verdichter (7) eintretenden Verbrennungsluftstrom (2), sowie eine Niederdruckabgasrückführung (10) mit einem stromauf des Verdichters (7) in den Frischluftkanal (4) mündenden Rückführungskanal (11) zur Führung eines Abgasrückführungsstromes (12), **dadurch gekennzeichnet, dass** der Drallerzeuger (9) als Zentrifugalabscheider (13) für im Abgasrückführungsstrom (12) sich bildendes Kondensat oder Partikel ausgebildet ist, wobei eine Einleitung des Abgasrückführungsstromes (12) im Wesentlichen tangential mit dem Drehsinn des Drallerzeugers (9) in den Drallerzeuger (9) vorgesehen ist.

2. Anordnung nach Anspruch 1, **dadurch gekennzeichnet, dass** eine Einleitung des Abgasrückführungsstromes (12) mit einer axialen Richtungskomponente, d.h. in einem spitzen Winkel zur Hauptströmungsrichtung (14) des Drallerzeugers (9) in den Drallerzeuger (9) vorgesehen ist.

3. Anordnung nach einem der Ansprüche 1 oder 2, **dadurch gekennzeichnet, dass** ein Umfangsabschnitt (15) des Drallerzeugers (9) mit einer radial außen liegenden Abscheiderinne (16) für abgeschiedenes Kondensat versehen ist.

4. Anordnung nach Anspruch 3, **dadurch gekennzeichnet, dass** sich die Abscheiderinne (16) in Umfangsrichtung des Drallerzeugers (9) über mindestens 180° und insbesondere über etwa 270° erstreckt.

5. Anordnung nach Anspruch 3 oder 4, **dadurch gekennzeichnet, dass** sich der Querschnitt der Abscheiderinne (16) mit dem Drehsinn des Drallerzeugers (9) vergrößert.

6. Anordnung nach einem der Ansprüche 3 bis 5, **dadurch gekennzeichnet, dass** ein Kondensatableitungskanal (19) bezogen auf den Drehsinn des Drallerzeugers (9) in einem Endbereich (20) der Abscheiderinne (16) aus dieser herausgeführt ist.

7. Anordnung nach einem der Ansprüche 3 bis 6, **dadurch gekennzeichnet, dass** an mindestens einer Längskante (17) der Abscheiderinne (16) eine insbesondere radial nach außen geneigte Dichtlippe (18) angeordnet ist.

8. Anordnung nach einem der Ansprüche 1 bis 7, **dadurch gekennzeichnet, dass** der Drallerzeuger (9) einen zentralen, im Wesentlichen geradlinig verlaufenden Hauptluftkanal (21) und einen mit einer tangentialen Richtungskomponente in den Hauptluftkanal (21) mündenden Drallluftkanal (22) aufweist, wobei der Rückführungskanal (11) in den Drallluftkanal (22) geführt ist.

9. Anordnung nach einem der Ansprüche 1 bis 8, **dadurch gekennzeichnet, dass** stromauf des Drallerzeugers (9) ein den Abgasrückführungsstrom (12) kühlender Wärmetauscher (23) im Rückführungskanal (11) angeordnet ist.

## Claims

1. Arrangement for supplying an internal combustion engine (1) in particular of a motor vehicle with a combustion-air flow (2) and for discharging an exhaust-gas flow (3) from the internal combustion engine (1), comprising a fresh-air duct (4) for guiding the combustion-air flow (2), an exhaust-gas duct (5) for guiding the exhaust-gas flow (3), an exhaust gas turbocharger (6) with a compressor (7) disposed in the fresh-air duct (4) and with a turbine (8) disposed in the exhaust-gas duct (5), a swirl generator (9) directly upstream of the compressor (7) for the combustion-air flow (2) entering the compressor (7) as well as a low-pressure exhaust-gas recirculation (10) with a recirculation duct (11) leading into the fresh-air duct (4) upstream of the compressor (7) for guiding an exhaust-gas recirculation flow (12), **characterized in that** the swirl generator (9) is designed as centrifugal separator (13) for condensate or particles being formed in the exhaust-gas recirculation flow (12), an introduction of the exhaust-gas recirculation flow (12) into the swirl generator (9) being provided essentially tangentially with the direction of rotation of the swirl generator (9).

2. Arrangement according to claim 1, **characterized in that** an introduction of the exhaust-gas recirculation flow (12) with an axial direction component into the swirl generator (9) is provided, i.e., in an acute angle in relation to the main flow direction (14) of the swirl generator (9).

3. Arrangement according to one of the claims 1 or 2, **characterized in that** a circumferential section (15) of the swirl generator (9) is provided with a radially outside located separation groove (16) for separated condensate.

4. Arrangement according to claim 3, **characterized in that** the separation groove (16) extends in circumferential direction of the swirl generator (9) over at least 180° and in particular over about 270°.

5. Arrangement according to claim 3 or 4, **characterized in that** the cross-section of the separation groove (16) increases with the direction of rotation of the swirl generator (9).

6. Arrangement according to one of the claims 3 to 5, **characterized in that** a condensate drainage (19) in relation to the direction of rotation of the swirl generator (9) in an end area (20) of the separation groove (16) is led out of it.

7. Arrangement according to one of the claims 3 to 6, **characterized in that** at at least one longitudinal edge (17) of the separation groove (16) an in particular radially outwards inclined sealing lip (18) is disposed.

8. Arrangement according to one of the claims 1 to 7, **characterized in that** the swirl generator (9) features a central main air line (21) extending essentially rectilinearly and a swirl air duct (22) leading with a tangential direction component into the main air line (21), the recirculation duct (11) being introduced into the swirl air duct (22).

9. Arrangement according to one of the claims 1 to 8, **characterized in that** upstream of the swirl generator (9) a heat exchanger (23) cooling the exhaust-gas recirculation flow (12) is disposed in the recirculation duct (11).

## Revendications

1. Ensemble destiné à alimenter un moteur de combustion interne (1), notamment d'un véhicule automobile avec un flux d'air de combustion (2), et à évacuer un flux de gaz d'échappement (3) du moteur de combustion interne (1), comprenant un canal d'air frais (4) servant à guider le flux d'air de combustion (2), d'un canal de gaz d'échappement (5) servant à guider le flux de gaz d'échappement (3), d'un turbocompresseur à gaz d'échappement (6) avec un compresseur (7) disposé dans un canal d'air frais (4) et avec une turbine (8) disposée dans le canal de gaz d'échappement (5), un générateur de tourbillons (9), monté directement en amont du compresseur (7), pour le flux d'air de combustion (2) entrant dans le compresseur (7), ainsi qu'un système de recirculation des gaz d'échappement à basse pression (10) avec un canal de recirculation (11) débouchant dans le canal d'air frais (4) en amont du compresseur (7) et destiné à guider un flux de recirculation du gaz d'échappement (12), **caractérisé en ce que** le générateur de tourbillons (9) est réalisé comme un cyclone de séparation (13) pour le condensat ou les particules se formant dans le flux de recirculation du gaz d'échappement (12), une introduction du flux de recirculation du gaz d'échappement (12) étant prévue de manière essentiellement tangentielle dans le générateur de tourbillons (9) avec le sens de rotation du générateur de tourbillons (9).

2. Ensemble selon la revendication 1, **caractérisé en ce qu'**une introduction du flux de recirculation du gaz d'échappement (12) avec une composante de direction axiale dans le générateur de tourbillons (9) est prévue, c'est-à-dire dans un angle aigu par rapport au sens de flux principal (14) du générateur de tourbillons (9).

3. Ensemble selon l'une des revendications 1 ou 2, **caractérisé en ce qu'**une section circonférentielle (15) du générateur de tourbillons (9) est pourvue d'une goulotte de séparation (16) placée à l'extérieur en sens radial pour le condensat séparé.

4. Ensemble selon la revendication 3, **caractérisé en ce que** la goulotte de séparation (16) s'étend sur au moins 180°, et notamment sur plus de 270°, en sens circonférentiel du générateur de tourbillons (9).

5. Ensemble selon la revendication 3 ou 4, **caractérisé en ce que** la section de la goulotte de séparation (16) augmente avec le sens de rotation du générateur de tourbillons (9).

6. Ensemble selon l'une des revendications 3 à 5, **caractérisé en ce qu'**un canal d'évacuation du condensat (19) sort de la goulotte de séparation (16), au niveau d'une extrémité (20) de cette goulotte, considéré dans le sens de rotation du générateur de tourbillons (9).

7. Ensemble selon l'une des revendications 3 à 6, **caractérisé en ce qu'**une lèvre d'étanchéité (18) orientée vers l'extérieur, notamment en sens radial, est disposée sur au moins une arête longitudinale (17) de la goulotte de séparation (16).

8. Ensemble selon l'une des revendications 1 à 7, **caractérisé en ce que** le générateur de tourbillons (9) présente un canal d'air principal (21) central, évoluant de manière essentiellement droite, et un canal d'air tourbillonnant (22) avec une composante de direction tangentielle débouchant dans le canal d'air principal (21), le canal de recirculation (11) étant introduit dans le canal d'air tourbillonnant (22).

9. Ensemble selon l'une des revendications 1 à 8, **caractérisé en ce qu'**un échangeur thermique (23) refroidissant le flux de recirculation du gaz d'échappement (12) est disposé dans le canal de recirculation (11) en amont du générateur de tourbillons (9).
